# EUROPÄISCHE PATENTSCHRIFT

(11) **EP 3 278 423 B1**
(45) Veröffentlichungstag und Bekanntmachung des Hinweises auf die Patenterteilung: **30.09.2020**
(21) Anmeldenummer: 16723370.9
(22) Anmeldetag: 19.05.2016
(51) Int. Cl.: H02K 3/40

(54) **WIDERSTANDSBELAG FÜR EINEN GLIMMSCHUTZ EINER ELEKTRISCHEN MASCHINE**
RESISTANCE COVERING FOR A CORONA SHIELD OF AN ELECTRIC MACHINE
REVÊTEMENT RÉSISTIF POUR UN DISPOSITIF ANTI-EFFLUVES D'UNE MACHINE ÉLECTRIQUE

(30) Priorität: 26.05.2015 DE 102015209594
(43) Veröffentlichungstag der Anmeldung: 07.02.2018
(73) Patentinhaber: Siemens Aktiengesellschaft, 80333 München (DE)
(72) Erfinder: LANG, Steffen, 91352 Hallerndorf (DE); PLOCHMANN, Bastian, 91413 Neustadt an der Aisch (DE)
(86) Internationale Anmeldenummer: PCT/EP2016/061194
(87) Internationale Veröffentlichungsnummer: WO 2016/188831

(56) Entgegenhaltungen:
- EP-A2- 2 868 718
- WO-A1-2006/128403
- WO-A1-2013/149815
- WO-A1-2014/146802
- FLEISCHMAN A J ET AL: "Polycrystalline silicon carbide for surface micromachining", MICRO ELECTRO MECHANICAL SYSTEMS, 1996, MEMS '96, PROCEEDINGS. AN INVE STIGATION OF MICRO STRUCTURES, SENSORS, ACTUATORS, MACHINES AND SYSTEM S. IEEE, THE NINTH ANNUAL INTERNATIONAL WORKSHOP ON SAN DIEGO, CA, USA 11-15 FEB. 1996, NEW YORK, NY, USA,IE, 11 February 1996 (1996-02-11), pages 234-238, XP010159393, DOI: 10.1109/MEMSYS.1996.493986 ISBN: 978-0-7803-2985-0
- Scholar Commons ET AL: "University of South Florida Mechanical Properties of Silicon Carbide (SiC) Thin Films Scholar Commons Citation", , 1 January 2007 (2007-01-01), XP055616241, Retrieved from the Internet: URL:https://scholarcommons.usf.edu/cgi/vie wcontent.cgi?article=1209&context=etd [retrieved on 2019-08-28]

## Beschreibung

Die Erfindung betrifft einen Widerstandsbelag für ein Glimmschutzsystem einer elektrische Maschine, beispielsweise eine Mittel- oder Hochspannungsmaschine, wie einen Generator in einem Kraftwerk zur Erzeugung von elektrischer Energie, aber auch andere elektrische Betriebsmittel mit einer höheren Bemessungsspannung wie Trafos, Durchführungen, Kabel etc.

Es werden immer leistungsstärkere elektrische Maschinen, wie beispielsweise Generatoren, entwickelt, da die fortschreitende Technik immer höhere Leistungsdichten verlangt. Ein leistungsstarker Generator, wie beispielsweise ein Turbogenerator, weist insbesondere einen Turbogeneratorständer mit einem Ständerblechpaket und einer Mehrzahl an Generatorwicklungsstäben auf, die elektrische Leiter sind. Das Ständerblechpaket weist eine Mehrzahl an Nuten auf, in denen die Leiter gelagert sind. Die Leiter stehen dabei aus dem Ständerblechpaket hervor.

Die Hauptisolierung, umfassend einen Widerstandsbelag, dieser Wicklung gegen das Blechpaket ist ein elektrisch hoch beanspruchtes System. Im Betrieb entstehen hohe Spannungen, welche in dem Isoliervolumen zwischen dem Leiterstab und dem auf Erdpotential liegendem Blechpaket abgebaut werden müssen. An den Kanten der Bleche im Blechpaket entstehen Feldüberhöhungen, die ihrerseits Teilentladungen hervorrufen. Diese Teilentladungen führen zu lokal sehr starken Erhitzungen. Diese finden an Luft und in unmittelbarer Berührung mit den organisch basierten Materialien der Isoliersysteme, auch des Widerstandsbelags des Glimmschutzsystems, statt, so dass Umsetzungen der organischen Materialien in niedermolekulare, volatile Produkte, beispielsweise in CO₂, resultieren.

Ein wichtiger Bestandteil des Glimmschutzes ist der Außenglimmschutz (AGS), insbesondere ein AGS mit Endenglimmschutz (EGS). Er wird bei größeren Generatoren und Elektromotoren direkt auf die Oberfläche der Wicklungsisolation appliziert. Der AGS besteht aktuell aus Bändern oder Lacken.

Der Widerstandsbelag für den Glimmschutz kann entweder durch Anstriche aus trocknenden und/oder härtbaren, mit elektrisch leitfähigen Partikeln ausgestatteten Matrizen wie beispielsweise Harzen, welche unmittelbar auf die Hauptisolierung aufgebracht werden, und/oder zusammen mit Bändern realisiert werden. Diese Bänder entstehen durch Imprägnieren von Vliesen oder Geweben mit duroplastischen Bindemitteln und können, je nach Anforderung, elektrisch leitfähige Partikel, wie z.B. Ruß, in unterschiedlicher Konzentration enthalten. Die am Markt erhältlichen Glimmschutzsysteme sind aber nicht teilentladungsresistent und die Füllstoffe in den imprägnierten Vliesen und Geweben neigen zum Ausbrechen.

Bekannt - beispielsweise aus der EP 2362 399 B1 oder der WO 2014/146802 A1 - ist ein Widerstandsbelag für ein Glimmschutzsystem, der eine Trägermatrix, wie beispielsweise einen Lack oder ein Harz, und darin eingeschlossene Partikel, die mit einer Beschichtung versehen sind, umfasst. Dort werden Partikel wie die Core-Shell-(CS)-Partikel, die in ihrer Form beliebig sind und aus einem Träger "core" und einer Beschichtung "shell" bestehen, beispielsweise Füllstoff-Partikel aus Glimmer, Aluminiumoxid, Siliziumoxid und/oder Siliziumcarbid und/oder einem undotiertem Metalloxid sind, eingesetzt.

Der Flächenwiderstand des Außenglimmschutzes ist bevorzugt relativ niedrig und darf eine gewisse Ober- und Untergrenze nicht über-bzw. unterschreiten (typische Werte 0,2 bis 10 kΩ). Der Widerstand in axialer Richtung sollte sehr hoch sein, in radialer Richtung sehr gering. Der Flächenwiderstand eines Endenglimmschutzes ist deutlich hochohmiger (typische Werte 10⁸ - 10¹⁰Ω).

Bei entsprechend hohen elektrischen Feldstärken im Isolationssystem und damit bei entsprechend hoher elektrischer Teilentladungsaktivität kommt es vor, dass der Außenglimmschutz im Betrieb komplett verbrennt und somit zu einer vorzeitigen Alterung der Isolierung und im schlimmsten Fall zu einem Erdschluss der elektrischen Maschine, das entspricht einem irreparablen Komplettausfall der Maschine, führt.

Aufgabe der vorliegenden Erfindung ist es daher, die Nachteile des Standes der Technik zu überwinden, einen Widerstandsbelag für ein stabiles Glimmschutzsystem zur Verfügung zu stellen.

Diese Aufgabe wird durch den Gegenstand der vorliegenden Erfindung, wie er in der Beschreibung und den Ansprüchen offenbart ist, gelöst.

Dementsprechend ist Gegenstand der vorliegenden Erfindung ein Widerstandsbelag nach Anspruch 1 für eine elektrische Maschine auf Basis einer elektrisch isolierenden Matrix die entweder chemisch oder physikalisch härtet, mit elektrisch leitfähigen Partikel, welche in diese Matrix eingearbeitet sind und in Form eines plättchenförmigen Metalloxids, dessen elektrische Leitfähigkeit durch Dotierung erzeugt ist, vorliegen, wobei in zwei Raumrichtungen die Perkolationsschwelle überschritten ist und sehr gute Leitfähigkeit herrscht, die ca. um Faktor 10 höher ist als in die dritte Raumrichtung, wobei eine ausgerichtete Schuppenstruktur in der Vorzugs-Schichtebene herausgebildet ist und so eine hohe Teilentladungsresistenz senkrecht zu der Schuppenstruktur erreicht wird, dadurch gekennzeichnet, dass diese plättchenförmigen Metalloxidpartikel, die die Schuppenstruktur in der Matrix erzeugen, in unbeschichtetem Zustand leitfähig sind.

Im Gegensatz zum Stand der Technik, der als Füllstoffe nur elektrisch leitfähige core-shell-Partikel kennt, werden hier substratlose, also elektrisch leitfähige "shell"-Partikel ohne "core" als Füllstoff eingesetzt.

Ein idealer Widerstandsbelag für einen Außen- und/oder Endenglimmschutz weist eine ausgeprägte Anisotropie im Widerstandsverhalten auf.

Als Matrixmaterial kann ein Kunststoff, ein polymerer Kunststoff, ein Glas und/oder eine sonstige Keramik eingesetzt werden.

Die Pigmentmassenkonzentration in der Vorzugs-Schichtebene liegt oberhalb der Perkolationsschwelle, wobei der makroskopische Widerstand in diesem Bereich stark abfällt und sich für höhere Füllgrade in einem Sättigungsbereich befindet. Somit ergibt sich durch eine weitere Erhöhung der PMK keine nennenswerte Veränderung des elektrischen Widerstandes der Verbundwerkstoffschicht. Für solche Anwendungen ist es sinnvoll planare Partikel zu verwenden, deren Form von der Kugelform abweicht, die also plättchenförmig ist. Diese haben im Vergleich zu kugelförmigen, also globularen Partikeln, eine geringere Perkolationsschwelle, womit bei geringeren PMKs gearbeitet werden kann, was verarbeitungs- und materialtechnisch große Vorteile mit sich bringt.

Hinsichtlich ihrer Teilentladungsresistenz sind die vorliegenden elektrisch leitfähigen Partikel im Widerstand besonders bevorzugt, weil sie durch ihre Form und Material, eine Art Panzer im Widerstandsbelag bilden, die die Teilentladungsresistenz bewirkt. Sie wirken dadurch chemisch stabiler und sind temperaturunempfindlicher, weil sie als ausgerichtete Plättchen im Widerstandsbelag in der Matrix vorliegen.

Der Widerstandsbelag hat bevorzugt einen elektrischen Quadratwiderstand von 1 bis 10⁵ Ω, bevorzugt von 10¹ bis 10³ Ω.

Der Füllstoff der Matrix, also vorliegend beispielsweise die elektrisch leitfähigen Partikel sind beispielsweise aus Metalloxiden, die grundsätzlich nicht oder nur schlecht leitfähig sind, aber beispielsweise eine Dotierung haben. Mit Hilfe der Dotierung kann die Leitfähigkeit des Füllstoffmaterials eingestellt werden.

Bevorzugt wird das Metalloxid aus der Gruppe gewählt: Metalloxid in binärer und tertiärer Mischphase aller Alkali-, Erdalkali- und/oder aller Übergangsmetall-Elemente, insbesondere Zinnoxid, Zinkoxid, Zinkstannat, Titanoxid, Bleioxid, Siliziumcarbid, Siliziumdioxid und/oder Aluminiumoxid.

Die Leitfähigkeit des Metalloxids wird beispielsweise durch Dotierung eingestellt, wobei das Dotierungselement für das Metalloxid ausgewählt ist aus Elementen der Gruppe der 3. bis 5. Hauptgruppe, der Übergangsmetalle, inklusive der seltenen Erden, beispielsweise aus der Gruppe folgender Elemente: Antimon, Indium, Cadmium; ausgewählt ist.

Nach einer weiteren bevorzugten Ausführungsform der Erfindung liegen die elektrisch leitfähigen Partikel in Form von massiven Teilchen vor.

Nach einer anderen Ausführungsform der Erfindung liegen die elektrisch leitfähigen Partikel in Form von Teilchen mit Poren und/oder zumindest einem Hohlraum vor.

Nach einer weiteren Ausführungsform der Erfindung weisen die elektrisch leitfähigen Partikel eine Beschichtung auf, die die elektrische Leitfähigkeit des Füllstoffs nicht oder nur unwesentlich beeinflusst.

Nach einer weiteren Ausführungsform der Erfindung ist diese Beschichtung beispielsweise aus einem oder mehreren Silanen, aus Wasserglas und/oder einem undotierten Metalloxid.

Nach einer vorteilhaften Ausführungsform der Erfindung umfasst der Widerstandsbelag noch weitere Füllstoffe in der nichtleitenden Matrix. Solche Füllstoffe sowie weitere Additive sind bekannt.

Nach einer vorteilhaften Ausführungsform der Erfindung liegt der elektrische Widerstand des Widerstandsbelags zwischen 1 und 10¹³ Ω, gemessen bei einer Feldstärke von 1V/mm.

Nach einer vorteilhaften Ausführungsform der Erfindung liegt die elektrische Nichtlinearität des Widerstandsbelagsmaterials zwischen 1 und 7.

Nach einer vorteilhaften Ausführungsform der Erfindung liegt die Einwaage der elektrisch leitfähigen Partikel zwischen 10 und 80 Gew%, bezogen auf das gesamte Widerstandsbelagsmaterial.

Zur Einstellung einer bestimmten Leitfähigkeit in der Matrix werden bevorzugt plättchen- und/oder stabförmige Partikel in die Matrix eingearbeitet, die ein hohes Aspektverhältnis von 5 oder größer, aufweisen.

Nach einer bevorzugten Ausführungsform werden diese jedoch durch globulare Partikel ergänzt.

Elektrisch leitfähige Metalloxide bilden eine wichtige Materialklasse in der Anwendung für Potentialsteuerungen bei Hoch- und Mittelspannungsmaschinen. Wichtige Vertreter sind hierbei plättchen- und/oder stabförmige Metalloxide und/oder Metallmischoxide, insbesondere solche mit kristallinem oder polykristallinem Anteil.

Da Metalloxide bevorzugt keramisch aufgebaut sind, liegen sie auch bevorzugt in einer Kristallmodifikation, also kristallin vor.

Dabei ist besonders bevorzugt, wenn das Metalloxid eine vergleichsweise planare, also stab- oder plättchenförmige Kristallstruktur aufweist.

Nach einer vorteilhaften Ausführungsform der Erfindung werden als elektrisch leitfähige Partikel z.B. dotierte, polykristalline Zinnoxide eingesetzt. Insbesondere werden auch Metalloxide eingesetzt, die planare Struktur, auch in kristallinem oder polykristallinem Zustand haben, wie beispielsweise dotiertes Aluminiumoxid und dotiertes Siliziumoxid.

Durch die Erfindung können insbesondere auch ruß- und/oder graphithaltige Widerstandsbeläge ersetzt werden.

Durch die vorliegende Erfindung wird insbesondere erreicht, dass kein Glimmer mehr zur Herstellung eines Widerstandsbelags abgebaut werden muss. Der Rohstoff Zinn, der typischerweise als funktionelle Schicht, als "shell", auf Glimmer aufgebracht wird, wird ergänzt.

Es können höhere Wärmeleitfähigkeiten durch den Einsatz funktioneller Partikel wie Aluminiumoxid erzielt werden.

Planare Partikel wie die hier beanspruchten plättchenförmigen Partikel, erhöhen den Erosionsweg von Teilentladungen und damit die Lebensdauer eines Isolationssystems.

Planare Partikel besitzen eine niedrige Perkolationsschwelle, wodurch deutlich weniger Füllstoff für gleiche Leitfähigkeiten im Widerstandsbelags-Material benötigt wird. Dies gilt insbesondere auch für den Vergleich mit globularen Füllstoff-Partikel.

Substratfreie Partikel sind in der Regel günstiger in der Herstellung als substratbehaftete, core-shell Partikel.

Keramische Füllstoffe sind resistent gegenüber Teilentladungen, verglichen beispielsweise mit Ruß oder Graphit.

Es können gemäß der Erfindung anisotrope elektrische Leitfähigkeiten realisiert werden, wobei in Richtung der ausgerichteten plättchenförmigen elektrisch leitfähigen Partikel die elektrische Leitfähigkeit deutlich höher als senkrecht dazu ist. Dabei handelt es sich beispielsweise um den Faktor 10.

Die Erfindung betrifft einen Widerstandsbelag für ein Glimmschutzsystem einer elektrische Maschine, beispielsweise eine Mittel- oder Hochspannungsmaschine, wie einen Generator in einem Kraftwerk zur Erzeugung von elektrischer Energie, aber auch andere elektrische Betriebsmittel mit einer höheren Bemessungsspannung wie Trafos, Durchführungen, Kabel etc. Im Gegensatz zu den bisher üblichen core-shell-Partikeln, die als Füllstoff zur Einstellung der elektrischen Leitfähigkeit im Widerstandsbelag eingesetzt wurden, werden vorliegend nur unbeschichtete Partikel zur Herstellung einer elektrischen Leitfähigkeit eingesetzt.

## Patentansprüche

1. Widerstandsbelag für eine elektrische Mittel- oder Hochspannungsmaschine auf Basis einer elektrisch isolierenden Matrix die entweder chemisch oder physikalisch härtet, mit elektrisch leitfähigen Partikel, welche in diese Matrix eingearbeitet sind und in Form eines plättchenförmigen Metalloxids, dessen elektrische Leitfähigkeit durch Dotierung erzeugt ist, vorliegen, wobei in zwei Raumrichtungen die Perkolationsschwelle überschritten ist und sehr gute Leitfähigkeit herrscht, die höher, insbesondere um Faktor 10 höher ist als in die dritte Raumrichtung, wobei eine ausgerichtete Schuppenstruktur in der Vorzugs-Schichtebene herausgebildet ist und dadurch hohe Teilentladungsresistenz senkrecht zu der Schuppenstruktur erreicht wird, **dadurch gekennzeichnet, dass** diese plättchenförmigen Metalloxidpartikel in unbeschichtetem Zustand leitfähig sind und wobei die elektrisch leitfähigen Partikel einen Hohlraum umfassend vorliegen.

2. Widerstandsbelag nach Anspruch 1, wobei das Material der Matrix polymer, also aus Kunststoff, oder aus Glas oder aus Keramik sein kann.

3. Widerstandsbelag nach einem der Ansprüche 1 oder 2, wobei die elektrisch leitfähigen Partikel ein Gemisch zumindest zweier Metalloxide umfassen.

4. Widerstandsbelag nach einem der vorstehenden Ansprüche, wobei die elektrisch leitfähigen Partikel zumindest teilweise kristallin vorliegen.

5. Widerstandsbelag nach einem der vorstehenden Ansprüche, wobei das Metalloxid ausgewählt ist aus der Gruppe folgender Verbindungen: Metalloxid in binärer und tertiärer Mischphase der Übergangsmetalle, der Alkali- und/oder Erdalkalimetalle, insbesondere Zinnoxid, Zinkoxid, Zinkstannat, Titanoxid, Bleioxid, Siliziumcarbid, Siliziumoxid und/oder Aluminiumoxid.

6. Widerstandsbelag nach einem der vorstehenden Ansprüche, wobei das Dotierungselement für das Metalloxid aus Elementen der Gruppe der 3. bis 5. Hauptgruppe, der Übergangsmetalle, inklusive der seltenen Erden, ausgewählt ist.

7. Widerstandsbelag nach einem der vorstehenden Ansprüche, wobei das Dotierungselement für das Metalloxid aus der Gruppe Antimon, Indium, Cadmium umfassend ausgewählt ist.

8. Widerstandsbelag nach einem der vorstehenden Ansprüche, wobei die elektrisch leitfähigen Partikel eine Beschichtung aufweisen, die die elektrische Leitfähigkeit der elektrisch leitfähigen Partikel nicht oder nur unwesentlich beeinflusst.

9. Widerstandsbelag nach Anspruch 8, wobei die elektrisch leitfähigen Partikel eine Beschichtung aus einem oder mehreren Silanen, aus Wasserglas und/oder einem undotierten Metalloxid haben.

10. Widerstandsbelag nach einem der vorstehenden Ansprüche, wobei der elektrische Widerstand des Widerstandsbelags zwischen 1 und 10¹³ Ω, gemessen bei einer Feldstärke von 1V/mm liegt.

11. Widerstandsbelag nach einem der vorstehenden Ansprüche, wobei die elektrische Nichtlinearität des Widerstandsbelagsmaterials zwischen 1 und 7 liegt.

12. Widerstandsbelag nach einem der vorstehenden Ansprüche, wobei die Einwaage der elektrisch leitfähigen Partikel zwischen 10 und 80 Gew%, bezogen auf das gesamte Material des Widerstandsbelags, liegt.

13. Widerstandsbelag nach einem der vorstehenden Ansprüche, wobei die elektrisch leitfähigen Partikel auch stäbchenförmige und/oder globulare Partikel umfassen.

## Claims

1. Resistance coating for an electrical mid- or high-voltage machine based on an electrically insulating matrix that cures either chemically or physically, comprising electrically conductive particles that are incorporated into this matrix and are in the form of a metal oxide in platelet form, the electrical conductivity of which is generated by doping, wherein the percolation threshold is exceeded in two spatial directions and there is very good conductivity which is higher, especially higher by a factor of 10, than in the third spatial direction, wherein an aligned flake structure has been developed in the preferential layer plane and this achieves high partial discharge resistance at right angles to the flake structure, **characterized in that** these metal oxide particles in platelet form are conductive in the uncoated state and wherein the electrically conductive particles are in a form comprising a cavity.

2. Resistance coating according to Claim 1, wherein the material of the matrix may be polymeric, i.e. made of plastic, or of glass or of ceramic.

3. Resistance coating according to either of Claims 1 and 2, wherein the electrically conductive particles comprise a mixture of at least two metal oxides.

4. Resistance coating according to any of the preceding claims, wherein the electrically conductive particles are at least partly in crystalline form.

5. Resistance coating according to any of the preceding claims, wherein the metal oxide is selected from the group of the following compounds: metal oxide in binary and tertiary mixed phase of the transition metals, the alkali metals and/or alkaline earth metals, especially tin oxide, zinc oxide, zinc stannate, titanium oxide, lead oxide, silicon carbide, silicon oxide and/or aluminium oxide.

6. Resistance coating according to any of the preceding claims, wherein the doping element for the metal oxide is selected from elements from the group of main groups 3 to 5 of the transition metals, including the rare earths.

7. Resistance coating according to any of the preceding claims, wherein the doping element for the metal oxide is selected from the group comprising antimony, indium, cadmium.

8. Resistance coating according to any of the preceding claims, wherein the electrically conductive particles have a coating having only an insignificant effect, if any, on the electrical conductivity of the electrically conductive particles.

9. Resistance coating according to Claim 8, wherein the electrically conductive particles have a coating of one or more silanes, of waterglass and/or an undoped metal oxide.

10. Resistance coating according to any of the preceding claims, wherein the electrical resistance of the resistance coating is between 1 and 10¹³ Ω, measured at a field strength of 1 V/mm.

11. Resistance coating according to any of the preceding claims, wherein the electrical nonlinearity of the resistance coating material is between 1 and 7.

12. Resistance coating according to any of the preceding claims, wherein the weight of the electrically conductive particles is between 10% and 80% by weight, based on the overall material of the resistance coating.

13. Resistance coating according to any of the preceding claims, wherein the electrically conductive particles also comprise particles in rod form and/or globular particles.

## Revendications

1. Revêtement résistif pour une machine électrique à moyenne ou à haute tension à base d'une matrice électriquement isolante qui durcit chimiquement ou physiquement, et comprenant des particules conductrices d'électricité qui sont incorporées dans cette matrice et se présentent sous la forme d'un oxyde métallique en forme de plaquettes, dont la conductivité électrique est générée par dopage, dans lequel le seuil de percolation est dépassé dans deux directions spatiales et une très bonne conductivité règne, qui est plus élevée, en particulier plus élevée d'un coefficient 10, que dans la troisième direction spatiale, dans lequel une structure en écailles alignée est formée au niveau de couche préféré et une résistance à la décharge partielle élevée perpendiculaire à la structure en écailles est ainsi obtenue, **caractérisé en ce que** ces particules d'oxyde métallique en forme de plaquettes à l'état non revêtu sont conductrices et dans lequel les particules conductrices d'électricité comprennent une cavité.

2. Revêtement résistif selon la revendication 1, dans lequel la matière de la matrice peut être un polymère, c'est-à-dire peut être constituée de plastique, ou peut être constituée de verre ou de céramique.

3. Revêtement résistif selon l'une des revendications 1 ou 2, dans lequel les particules conductrices d'électricité comprennent un mélange d'au moins deux oxydes métalliques.

4. Revêtement résistif selon l'une des revendications précédentes, dans lequel les particules conductrices d'électricité se présentent au moins partiellement sous forme cristalline.

5. Revêtement résistif selon l'une des revendications précédentes, dans lequel l'oxyde métallique est choisi dans le groupe des composés suivants : oxyde métallique en phase mixte binaire et tertiaire des métaux de transition, des métaux alcalins et/ou alcalino-terreux, notamment l'oxyde d'étain, l'oxyde de zinc, le stannate de zinc, l'oxyde de titane, l'oxyde de plomb, le carbure de silicium, l'oxyde de silicium et/ou l'oxyde d'aluminium.

6. Revêtement résistif selon l'une des revendications précédentes, dans lequel l'élément dopant pour l'oxyde métallique est choisi parmi des éléments du groupe du 3^{ème} au 5^{ème} groupe principal, des métaux de transition, y compris les terres rares.

7. Revêtement résistif selon l'une des revendications précédentes, dans lequel l'élément dopant pour l'oxyde métallique est choisi dans le groupe comprenant l'antimoine, l'indium et le cadmium.

8. Revêtement résistif selon l'une des revendications précédentes, dans lequel les particules conductrices d'électricité ont un revêtement qui n'influence pas la conductivité électrique des particules conductrices d'électricité ou les influence seulement de manière insignifiante.

9. Revêtement résistif selon la revendication 8, dans lequel les particules conductrices d'électricité ont un revêtement constitué d'un ou plusieurs silanes, de verre d'eau et/ou d'oxyde métallique non dopé.

10. Revêtement résistif selon l'une des revendications précédentes, dans lequel la résistance électrique du revêtement résistif est comprise entre 1 et 10¹³ Ω, mesurée avec une intensité de champ de 1 V/mm.

11. Revêtement résistif selon l'une des revendications précédentes, dans lequel la non-linéarité électrique de la matière du revêtement résistif est comprise entre 1 et 7.

12. Revêtement résistif selon l'une des revendications précédentes, dans lequel le poids des particules conductrices d'électricité est compris entre 10 et 80 % en poids, par rapport à la matière totale du revêtement résistif.

13. Revêtement résistif selon l'une des revendications précédentes, dans lequel les particules conductrices d'électricité comprennent également des particules en forme de bâtonnets et/ou globulaires.
